# EUROPEAN PATENT APPLICATION

(11) **EP 4 709 023 A1**
(43) Date of publication of application: **11.03.2026**
(21) Application number: 25198491.0
(22) Date of filing: 27.08.2025
(51) Int. Cl.: H04W 74/0833, H04W 72/02

(54) **ENHANCED MULTI-LINK SINGLE RADIO IN-DEVICE CROSS-LINK AND SAME-LINK INITIAL CONTROL FRAME COLLISION AVOIDANCE AND HANDLING**

(30) Priority: 30.08.2024 US 202463689158 P; 30.05.2025 US 202519224316
(71) Applicant: Apple Inc., Cupertino, CA 95014 (US)
(72) Inventor: MEHRNOUSH, Morteza, Cupertino, 95014 (US); NARIBOLE, Sharan, Cupertino, 95014 (US); SHANI, Oren, Cupertino, 95014 (US); KRISHNAN, Neelakantan Nurani, Cupertino, 95014 (US); HEDAYAT, Ahmad Reza, Cupertino, 95014 (US); AJAMI, Abdel Karim, Cupertino, 95014 (US); MONAJEMI, Pooya, Cupertino, 95014 (US); LIU, Yong, Cupertino, 95014 (US); BATRA, ANUJ, Cupertino, 95014 (US)
(74) Representative: Bateman, Samuel Alec

(57) **Abstract**

This disclosure relates to methods for handling and avoiding enhanced multi-link single radio in-device cross-link and same-link initial control frame collisions in a wireless local area network. Techniques for handling cross-link collisions can include determining when an enhanced multi-link single radio cross-link collision occurs for a wireless device and selecting a contention window for the wireless device based on the cross-link collision. Techniques for avoiding same-link collisions can include adjusting backoff counter operation on one enhanced multi-link single radio link based on a transmit opportunity that is occurring on another enhanced multi-link single radio link for a wireless device.

## Description

### TECHNICAL FIELD

The present application relates to wireless communication, including techniques and devices for enhanced multi-link single radio cross-link and same-link initial control frame collision avoidance and handling in a wireless local area network architecture.

### DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs), can take the form of smart phones or tablets that a user typically carries. One aspect of wireless communication that can commonly be performed by mobile devices can include wireless networking, for example over a wireless local area network (WLAN), which can include devices that operate according to one or more communication standards in the IEEE 802.11 family of standards.

Some wireless devices can be capable of performing limited operation on multiple links, such as enhanced multi-link single radio devices in Wi-Fi systems. Such operation can potentially provide expanded capabilities to wireless devices with lower implementation cost than providing simultaneous transmit and receive capability, in some instances, but can also introduce additional potential for initial control frame collisions. Accordingly, improvements in the field are desired.

### SUMMARY

Embodiments are presented herein of, *inter alia,* systems, apparatuses, and methods for devices to handle and possibly avoid enhanced multi-link single radio cross-link and same-link initial control frame collisions in a wireless local area network architecture.

A wireless device can include one or more antennas, one or more radios operably coupled to the one or more antennas, and a processor operably coupled to the one or more radios. The wireless device can be configured to establish a connection with an access point through a wireless local area network (WLAN) over one or multiple wireless links, or can be an access point configured to establish a connection with one or more other wireless devices through a WLAN over one or multiple wireless links. In some embodiments, the wireless device can operate in each of the multiple wireless links using a respective radio of the one or more radios.

According to the techniques described herein, a wireless device can determine when an initial control frame failure on one link is due to an enhanced multi-link single radio cross-link collision with a wireless device to which the initial control frame is addressed, for example if the initial control frame is transmitted on an enhanced multi-link single radio link and based on timing of a transmission on another enhanced multi-link single radio device link. The wireless device can further determine whether to modify the contention window for the wireless device to which the initial control frame is addressed based on whether the initial control frame failure is due to an enhanced multi-link single radio cross-link collision. This can potentially help improve the effectiveness of contention window sizing for that wireless device, at least in some instances.

Techniques are also described herein for a wireless device to prevent at least some enhanced multi-link single radio same-link collisions. These techniques can include determining when a transmit opportunity is occurring on one enhanced multi-link single radio link and adjusting or modifying backoff counter operation on another enhanced multi-link single radio link based on the transmit opportunity. For example, the backoff counter operation modification could include pausing the backoff counter while the transmit opportunity is occurring, to help reduce the likelihood of multiple devices' backoff counters elapsing (reaching 0) during the transmit opportunity and transmitting at the same time once the transmit opportunity ends. As another example, the backoff counter operation modification could include discarding a backoff counter that reaches 0 on an enhanced multi-link single radio link while a transmit opportunity is occurring on another enhanced multi-link single radio link, and starting a new backoff counter (e.g., using the same contention window) once the transmit opportunity ends, which can similarly have the effect of reducing the likelihood of multiple devices' transmitting at the same time once the transmit opportunity ends.

The techniques described herein can be implemented in and/or used with a number of different types of devices, including but not limited to cellular phones, tablet computers, accessory and/or wearable computing devices, portable media players, base stations, access points, and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a wireless device, according to some embodiments;
Figure 2 is a block diagram illustrating an example wireless device, according to some embodiments;
Figure 3 is a block diagram illustrating an example network element or access point, according to some embodiments;
Figure 4 is a block diagram illustrating an example modem or baseband processor, according to some embodiments;
Figures 5-6 are flowchart diagrams illustrating example methods for enhanced multi-link single radio (EMLSR) cross-link and same-link initial control frame collision avoidance and handling in a wireless local area network, according to some embodiments;
Figures 7-10 illustrate possible cross-link collision and near-collision scenarios that could occur for one possible EMLSR device architecture, according to some embodiments;
Figures 11-14 illustrate possible cross-link collision and near-collision scenarios that could occur for another possible EMLSR device architecture, according to some embodiments;
Figures 15-16 illustrates example aspects of possible cross-link collision handling techniques, according to some embodiments;
Figures 17-18 illustrate example aspects of possible uplink and downlink EMLSR same-link collision scenarios, according to some embodiments; and
Figures 19-22 illustrate example aspects of possible approaches to avoiding uplink and downlink EMLSR same-link collision scenarios, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:
Memory Medium - Any of various types of non-transitory memory devices or storage devices. The term "memory medium" is intended to include any computer system memory or random access memory, such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" can include two or more memory mediums which can reside in different locations, e.g., in different computer systems that are connected over a network. The memory medium can store program instructions (e.g., embodied as computer programs) that can be executed by one or more processors.
Carrier Medium - a memory medium as described above, as well as a physical transmission medium, such as a bus, network, and/or other physical transmission medium that conveys signals such as electrical, electromagnetic, or digital signals.
Computer System - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.
**User Equipment (UE) (or "UE Device")** - any of various types of computer systems or devices that are mobile or portable, and that perform wireless communications. Examples of UE devices include mobile telephones or smart phones (e.g., iPhone^{™}, Android^{™}-based phones), tablet computers, portable gaming devices, laptops, wearable devices (e.g., smart watch, smart glasses, smart goggles, head-mounted display devices, and so forth), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.
**Wireless Device or Station (STA)** - any of various types of computer systems or devices that perform wireless communications. A wireless device can be portable (or mobile), or can be stationary or fixed at a certain location. The terms "station" and "STA" are used similarly. A UE is an example of a wireless device.
**Communication Device** - any of various types of computer systems or devices that perform communications, where the communications can be wired or wireless. A communication device can be portable (or mobile) or can be stationary or fixed at a certain location. A wireless device is an example of a communication device. A UE is another example of a communication device.
**Base Station or Access Point (AP)** - The term "Base Station" has the full breadth of its ordinary meaning, and at least includes a wireless communication station installed at a fixed location and used to communicate as part of a wireless communication system. The term "access point" (or "AP") is typically associated with Wi-Fi-based communications and is used similarly.
**Processing Element (or Processor)** - refers to various elements or combinations of elements that are capable of performing a function in a device, e.g., in a communication device or in a network infrastructure device. Processors can include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.
**IEEE 802.11** - refers to technology based on IEEE 802.11 wireless standards such as 802.11a, 802.11b, 802.11g, 802.11n, 802.11-2012, 802.11ac, 802.11ad, 802.11ax, 802.11ay, 802.11be, and/or other IEEE 802.11 standards. IEEE 802.11 technology can also be referred to as "Wi-Fi" or "wireless local area network (WLAN)" technology.
**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

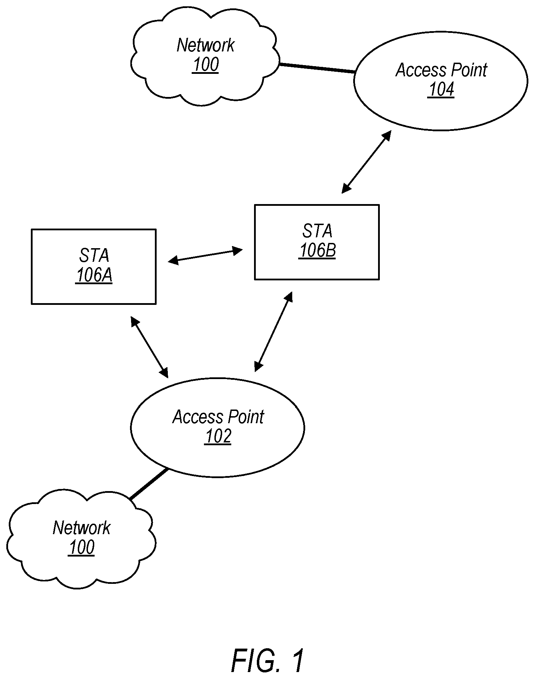

### Figures 1-2 - Wireless Communication System

Figure 1 illustrates an example of a wireless communication system. It is noted that Figure 1 represents one possibility among many, and that features of the present disclosure can be implemented in any of various systems, as desired. For example, instances described herein can be implemented in any type of wireless device. The wireless communication system described below is one example.

As shown, the exemplary wireless communication system includes an access point (AP) 102, which communicates over a transmission medium with one or more wireless devices 106A, 106B, etc. Wireless devices 106A and 106B can be user devices, such as stations (STAs), non-AP STAs, UEs, or other WLAN devices.

The STA 106 can be a device with wireless network connectivity, such as a mobile phone, a hand-held device, a wearable device (e.g., such as a smart watch, smart glasses, and/or a head-mounted display device), a computer or a tablet, an unmanned aerial vehicle (UAV), an unmanned aerial controller (UAC), an automobile, or virtually any other type of wireless device. The STA 106 can include a processor (processing element) that is configured to execute program instructions stored in memory. The STA 106 can perform any of the methods described herein by executing one or more of such stored instructions. Alternatively, or in addition, the STA 106 can include a programmable hardware element, such as an FPGA (field-programmable gate array), an integrated circuit (e.g., an ASIC), a programmable logic device (PLD), and/or any of various other possible hardware components that are configured to perform (e.g., individually or in combination) any of the methods described herein, or any portion of any of the methods described herein.

The AP 102 can be a stand-alone AP or an enterprise AP, can be a base transceiver station (BTS) or cell site, and can include hardware that enables wireless communication with the STA devices 106A and 106B. The AP 102 can also be equipped to communicate with a network 100 (e.g., a core network of a service provider (e.g., a cellular service provider, an Internet service provider, and/or a carrier), a WLAN, an enterprise network, and/or another communication network connected to the Internet, among various possibilities). Thus, the AP 102 can facilitate communication among the STA devices 106 and/or between the STA devices 106 and the network 100. AP 102 can be configured to provide communications over one or more wireless technologies, such as any, any combination of, and/or all of 802.11 a, b, g, n, ac, ad, ax, ay, be and/or other 802.11 versions, and/or a cellular protocol, such as 6G, 5G and/or LTE, including in an unlicensed band.

The communication area (or coverage area) of the AP 102 can be referred to as a basic service area (BSA) or cell. The AP 102 and the STAs 106 can be configured to communicate over the transmission medium using any of various radio access technologies (RATs) or wireless communication technologies, such as Wi-Fi, LTE, LTE-Advanced (LTE-A), 5G NR, 6G, ultra-wideband (UWB), etc.

AP 102 and other similar access points (not shown) operating according to one or more wireless communication technologies can thus be provided as a network, which can provide continuous or nearly continuous overlapping service to STA devices 106A-B and similar devices over a geographic area, e.g., via one or more communication technologies. A STA can roam from one AP to another AP directly, or can transition between APs and/or network cells (e.g., such as cellular network cells).

Note that at least in some instances a STA device 106 can be capable of communicating using any of multiple wireless communication technologies. For example, a STA device 106 might be configured to communicate using Wi-Fi, LTE, LTE-A, 5G NR, 6G, Bluetooth, UWB, one or more satellite systems, etc. Other combinations of wireless communication technologies (including more than two wireless communication technologies) are also possible. Likewise, in some instances a STA device 106 can be configured to communicate using only a single wireless communication technology.

As shown, the exemplary wireless communication system can also include an access point (AP) 104, which communicates over a transmission medium with the wireless device 106B. The AP 104 also provides communicative connectivity to the network 100. Thus, wireless devices can connect to either or both of AP 102 (or another cellular base station) and the access point 104 (or another access point) to access the network 100. For example, a STA can roam from AP 102 to AP 104, e.g., based on one or more factors, such as mobility, coverage, interference, and/or capabilities. Note that it can also be possible for the AP 104 to provide access to a different network (e.g., an enterprise Wi-Fi network, a home Wi-Fi network, etc.) than the network to which the AP 102 provides access.

The STAs 106A and 106B can include handheld devices such as smart phones or tablets, wearable devices such as smart watches, smart glasses, head-mountable display devices, and/or can include any of various types of devices with wireless communication capability. For example, one or more of the STAs 106A and/or 106B can be a wireless device intended for stationary or nomadic deployment, such as an appliance, measurement device/sensor, control device, etc.

The STA 106B can also be configured to communicate with the STA 106A. For example, the STA 106A and STA 106B can be capable of performing direct device-to-device (D2D) communication. Note that such direct communication between STAs can also or alternatively be referred to as peer-to-peer (P2P) communication. The direct communication can be supported by the AP 102 (e.g., the AP 102 can facilitate discovery, among various possible forms of assistance), or can be performed in a manner unsupported by the AP 102. Such P2P communication can be performed using 3GPP-based D2D communication techniques, Wi-Fi-based P2P communication techniques, UWB, BT, and/or any of various other direct communication techniques, according to various examples.

The STA 106 can include one or more devices or integrated circuits for facilitating wireless communication, potentially including a Wi-Fi modem, cellular modem, and/or one or more other wireless modems. The wireless modem(s) can include one or more processors (processor elements) and various hardware components as described herein. The STA 106 can perform any of (or any portion of) the methods described herein by executing instructions on one or more programmable processors. For example, the STA 106 can be configured to perform techniques for enhanced multi-link single radio cross-link and same-link initial control frame collision avoidance and handling in a wireless communication system, such as according to the various methods described herein. Alternatively, or in addition, the one or more processors can be one or more programmable hardware elements such as an FPGA (field-programmable gate array), application-specific integrated circuit (ASIC), or other circuitry, that is configured to perform any of the methods described herein, or any portion of any of the methods described herein. The wireless modem(s) described herein can be used in a STA device as defined herein, a wireless device as defined herein, or a communication device as defined herein. The wireless modem described herein can also be used in an AP, a base station, a pico cell, a femto cell, and/or other similar network side device.

The STA 106 can include one or more antennas for communicating using two or more wireless communication protocols or radio access technologies (RATs). In some instances, the STA device 106 can be configured to communicate using a single shared radio. The shared radio can couple to a single antenna, or can couple to multiple antennas (e.g., for MIMO) for performing wireless communications. Alternatively, the STA device 106 can include two or more radios, each of which can be configured to communicate via a respective wireless link. Other configurations are also possible.

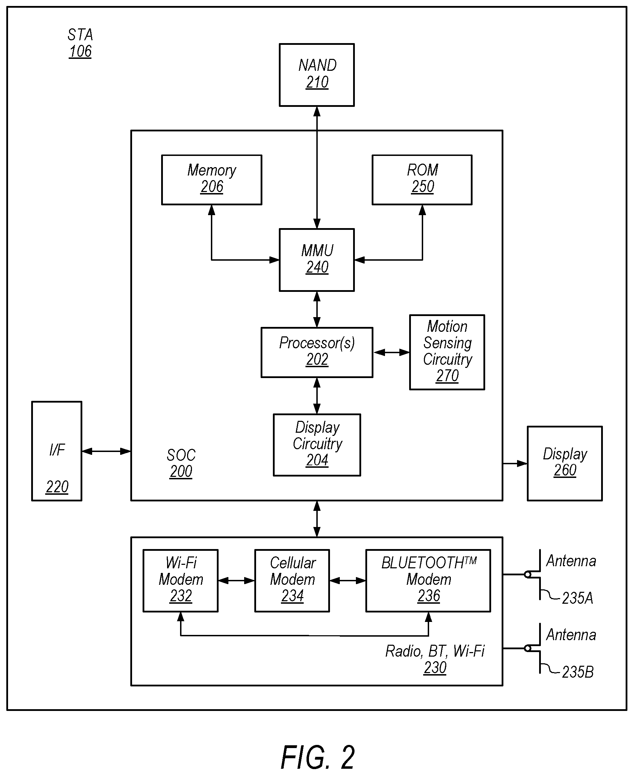

### Figure 2 - Example Block Diagram of a STA Device

Figure 2 illustrates an example block diagram of a STA device, such as STA 106. In some instances, the STA 106 can additionally or alternatively be referred to as a UE 106. STA 106 also can be referred to as a non-AP STA 106. As shown, the STA 106 can include a system on chip (SOC) 200, which can include one or more portions configured for various purposes. Some or all of the various illustrated components (and/or other device components not illustrated, e.g., in variations and alternative arrangements) can be "communicatively coupled" or "operatively coupled," which terms can be taken herein to mean components that can communicate, directly or indirectly, when the device is in operation.

In some instances, the STA 106 can be configured as a Multi-Link Device (MLD). In such instances, the STA 106 (e.g., one or more radios of the STA 106) can be configured for concurrent data transmission and reception in multiple channels across a single band and/or multiple frequency bands (e.g., such as a 2.4 GHz band, a 5 GHz band, and/or a 6 GHz band). As such, the STA 106 (e.g., one or more radios of the STA 106) can be configured to perform Multi-Link Operation (MLO). For example, the STA 106 (e.g., one or more radios of the STA 106) can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

As shown, the SOC 200 can include processor(s) 202, which can execute program instructions for the STA 106, and display circuitry 204, which can perform graphics processing and provide display signals to the display 260. The SOC 200 can also include motion sensing circuitry 270, which can detect motion of the STA 106 in one or more dimensions, for example using a gyroscope, accelerometer, and/or any of various other motion sensing components. The processor(s) 202 can also be coupled to memory management unit (MMU) 240, which can be configured to receive addresses from the processor(s) 202 and translate those addresses to locations in memory (e.g., memory 206, read only memory (ROM) 250, flash memory 210). The MMU 240 can be configured to perform memory protection and page table translation or set up. In some instances, the MMU 240 can be included as a portion of the processor(s) 202.

As shown, the SOC 200 can be coupled to various other circuits of the STA 106. For example, the STA 106 can include various types of memory (e.g., including NAND flash 210), a connector interface 220 (e.g., for coupling to a computer system, dock, charging station, etc.), the display 260, and wireless communication circuitry 230 (e.g., for LTE, LTE-A, 5G NR, 6G, Bluetooth, Wi-Fi, NFC, GPS, UWB, peer-to-peer (P2P), device-to-device (D2D), etc.).

The STA 106 can include at least one antenna, and in some instances can include multiple antennas, e.g., 235A and 235B, for performing wireless communication with access points, base stations, wireless stations, and/or other devices. For example, the STA 106 can use antennas 235A and 235B to perform the wireless communication. As noted above, the STA 106 can, in some examples, be configured to communicate wirelessly using a plurality of wireless communication standards or radio access technologies (RATs).

The wireless communication circuitry 230 can include a Wi-Fi modem 232, a cellular modem 234, and a Bluetooth modem 236. Note that one or more of the Wi-Fi modem 232, the cellular modem 234, and/or the Bluetooth modem 236 can be configured for MLO, e.g., as described above. The Wi-Fi modem 232 is for enabling the STA 106 to perform Wi-Fi or other WLAN communications, e.g., on an 802.11 network. The Bluetooth modem 236 is for enabling the STA 106 to perform Bluetooth communications. The cellular modem 234 can be capable of performing cellular communication according to one or more cellular communication technologies, e.g., in accordance with one or more 3GPP specifications.

As described herein, STA 106 can include hardware and software components for implementing aspects of this disclosure. For example, one or more components of the wireless communication circuitry 230 (e.g., Wi-Fi modem 232, cellular modem 234, BT modem 236) of the STA 106 can be configured to implement part or all of the methods for enhanced multi-link single radio cross-link and same-link initial control frame collision avoidance and handling described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

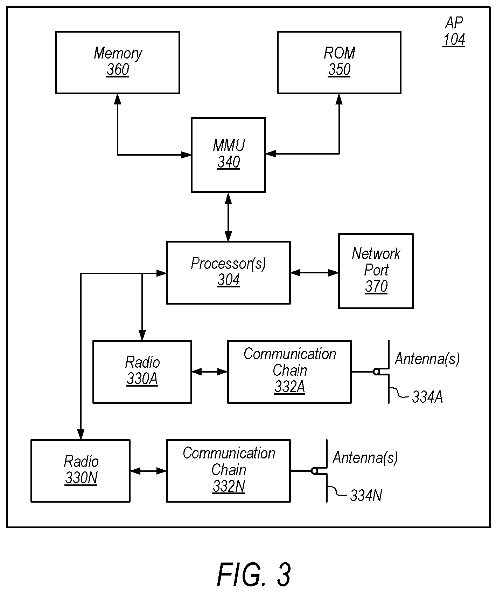

### Figure 3 - Block Diagram of an Access Point

Figure 3 illustrates an example block diagram of an access point (AP) 104. In some instances (e.g., in an 802.11 communication context), the AP 104 can also be referred to as a station (STA), and possibly more particularly as an AP STA. It is noted that the AP of Figure 3 is merely one example of a possible access point. As shown, AP 104 can include processor(s) 304, which can execute program instructions for the AP 104. The processor(s) 304 can also be coupled to memory management unit (MMU) 340, which can be configured to receive addresses from the processor(s) 304 and translate those addresses to locations in memory (e.g., memory 360 and read only memory (ROM) 350) or to other circuits or devices.

In some instances, the AP 104 can be configured as a Multi-Link Device (MLD). In such instances, the AP 104 (e.g., one or more radios of the AP 104) can be configured for concurrent data transmission and reception in multiple channels across a single band and/or multiple frequency bands (e.g., such as a 2.4 GHz band, a 5 GHz band, and/or a 6 GHz band). As such, the AP 104 (e.g., one or more radios of the AP 104) can be configured to perform Multi-Link Operation (MLO). For example, the AP 104 (e.g., one or more radios of the AP 104) can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

The AP 104 can include at least one network port 370. The network port 370 can be configured to couple to a network and provide multiple devices, such as STA devices 106, with access to the network, for example as described herein above in Figure 1.

The network port 370 (or an additional network port) can also or alternatively be configured to couple to a cellular network, e.g., a core network of a cellular service provider (e.g., a carrier and/or cellular carrier). The core network can provide mobility related services and/or other services to a plurality of devices, such as STA devices 106. In some cases, the network port 370 can couple to a telephone network via the core network, and/or the core network can provide a telephone network (e.g., among other STA devices serviced by the cellular service provider).

The AP 104 can include one or more radios 330A-330N, which can be coupled to one or more respective communication chains and at least one antenna 334, and possibly multiple antennas. The antenna(s) 334 can be configured to operate, in conjunction with one or more other components, as a wireless transceiver and can be further configured to communicate with STA devices 106 via radios 330A-330N. Note that one or more of the radios 330A-330N can be configured for MLO, e.g., as described above. The antenna(s) 334A-N communicate with one or more respective radios 330A-N via communication chains 332A-N. Communication chains 332 can be receive chains, transmit chains, or both. The radios 330A-N can be configured to communicate in accordance with various wireless communication standards, including, but not limited to, LTE, LTE-A, 5G NR, 6G, UWB, Wi-Fi, BT, etc. The AP 104 can be configured to operate on multiple wireless links using the one or more radios 330A-N. In some implementations, each radio can be used to operate on a respective wireless link.

The AP 104 can be configured to communicate wirelessly using multiple wireless communication standards. In some instances, the AP 104 can include multiple radios, which can enable the network entity to communicate according to multiple wireless communication technologies. For example, as one possibility, the AP 104 can include a 4G or 5G radio for performing communication according to a 3GPP wireless communication technology, as well as a Wi-Fi radio for performing communication according to one or more Wi-Fi specifications. In such a case, the AP 104 can be capable of operating as both a cellular base station and a Wi-Fi access point. As another possibility, the AP 104 can include a multi-mode radio that is capable of performing communications according to any of multiple wireless communication technologies (e.g., 5G NR and Wi-Fi, 5G NR and LTE, etc.). As still another possibility, the AP 104 can be configured to act exclusively as a Wi-Fi access point, e.g., without cellular communication capability.

As described further herein, the AP 104 can include hardware and software components for implementing or supporting implementation of features described herein, such as enhanced multi-link single radio cross-link and same-link initial control frame collision avoidance and handling, among various other possible features. The processor 304 of the AP 104 can be configured to implement, or support implementation of, part or all of the methods described herein, e.g., by executing program instructions stored on a memory medium (e.g., a non-transitory computer-readable memory medium) to operate multiple wireless links using multiple respective radios. Alternatively, the processor 304 can be configured as a programmable hardware element, such as an FPGA (Field Programmable Gate Array) or ASIC (Application Specific Integrated Circuit), or a combination thereof. Alternatively (or in addition) the processor 304 of the AP 104, in conjunction with one or more of the other components 330, 332, 334, 340, 350, 360, 370 can be configured to implement, or support implementation of, part or all of the features described herein.

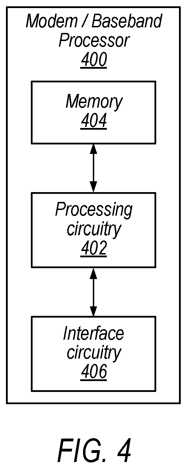

### Figure 4 - Block Diagram of a Modem or Baseband Processor

Figure 4 illustrates an example block diagram of a modem 400, which can also be referred to as baseband processor 400. The modem 400 can provide signal processing functionality for one or more wireless communication technologies, such as Wi-Fi, Bluetooth, and/or a cellular (e.g., 3GPP) communication technology. Thus, as one possibility, modem 400 can represent a Wi-Fi modem; for example, the modem 400 illustrated in Figure 4 can represent one possible example of Wi-Fi modem 232 illustrated in Figure 2. As another possibility, modem 400 can represent a cellular modem or cellular baseband processor; for example, the modem 400 illustrated in Figure 4 can represent one possible example of cellular modem 234 illustrated in Figure 2. As a still further possibility, modem 400 can represent a Bluetooth modem; for example, the modem 400 illustrated in Figure 4 can represent one possible example of Wi-Fi modem 236 illustrated in Figure 2. In some instances, the modem 400 could implement functionality for supporting communication according to multiple wireless communication technologies. At least in some instances, the modem 400 can run a real-time operating system, e.g., for facilitating performance of timing-dependent wireless communication functionality.

In some instances, the modem 400 can be configured for concurrent data transmission and reception in multiple channels across a single band and/or multiple frequency bands (e.g., such as a 2.4 GHz band, a 5 GHz band, and/or a 6 GHz band). As such, the modem 400 can be configured to perform Multi-Link Operation (MLO). For example, the modem 400 can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

The modem 400 can include processing circuitry 402, which could include one or more processor cores, ASICs, programmable hardware elements, digital signal processors, and/or other processing elements. The processing circuitry can be capable of preparing baseband signals for up-conversion and transmission by radio circuitry of a wireless device, and/or for processing baseband signals received and down-converted by radio circuitry of a wireless device. Such processing could include signal modulation, encoding, decoding, etc., among various possible functions. The processing circuitry can also or alternatively be capable of performing functionality for one or more baseband and/or other layers/sublayers of a protocol stack for the wireless communication technology (or technologies) implemented by the modem 400, such as physical layer (PHY) functionality, media access control (MAC) functionality, logical link control (LLC) functionality, radio resource control (RRC) functionality, radio link control (RLC) functionality, etc. In some instances, the modem 400 can itself include at least some radio circuitry (e.g., for performing the conversion of input baseband signals to radio frequency signals and/or of input radio frequency signals to baseband signals). Alternatively, or in addition, some or all such functions can be performed by separate radio/transceiver components of the wireless device.

The modem 400 can also include memory 404, which can include a non-transitory computer-readable memory medium. The memory 404 can include program instructions for performing signal processing and/or any of various possible general processing functions. The processing circuitry 402 can be capable of executing the program instructions stored in the memory 404. The memory 404 can also store data generated and/or used during processing performed by the processing circuitry 402.

As shown, the modem 400 can further include interface circuitry, e.g., for communicating with other components of a wireless device (such as STA 106 or AP 104 illustrated in Figures 1-3), such as an application processor, radio / transceiver circuitry, and/or any of various other components. Such interfaces can be implemented in any of various ways; for example, as one possibility, the modem 400 can have a direct interface with transceiver circuitry of a wireless device, and can have an additional indirect interface with an application processor and/or other components of the wireless device by way of a system bus. Other configurations are also possible.

In at least some instances, the hardware and software components of the modem 400 can be configured to implement or support implementation of features described herein, such as enhanced multi-link single radio cross-link and same-link initial control frame collision avoidance and handling, among various other possible features. For example, the processing circuitry 402 of the modem 400 can be configured to implement, or support implementation of, part or all of the methods described herein, e.g., by executing program instructions stored on memory (e.g., non-transitory computer-readable memory medium) 404 and/or using dedicated hardware components.

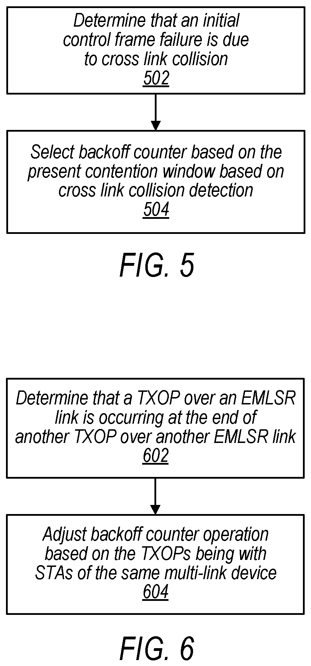

### Figures 5-6 - Enhanced Multi-Link Single Radio Cross-Link and Same-Link Initial Control Frame Collision Avoidance and Handling Flowcharts

Figures 5-6 are flowchart diagrams illustrating methods for supporting enhanced multi-link single radio cross-link and same-link initial control frame collision avoidance and handling in a WLAN, according to some embodiments. In various embodiments, some of the elements of the methods shown can be performed concurrently, in a different order than shown, can be substituted for by one or more other method elements, or can be omitted. Additional method elements can also be performed as desired.

Aspects of the methods of Figures 5-6 can be implemented by a wireless device, such as the AP 104 or STA 106 illustrated in and described with respect to Figures 1-4, or more generally in conjunction with any of the computer circuitry, systems, devices, elements, or components shown in the Figures, among others, as desired. For example, a processor (such as baseband processor 400 illustrated in and described with respect to Figure 4) and/or other hardware of such a device can be configured to cause the device to perform any combination of the illustrated method elements and/or other method elements.

Note that while at least some elements of the methods of Figures 5-6 are described in a manner relating to the use of communication techniques and/or features associated with IEEE 802.11 specification documents, such description is not intended to be limiting to the disclosure, and aspects of the methods of Figures 5-6 can be used in any suitable wireless communication system, as desired. As shown, the methods can operate as follows.

An access point (AP) wireless device may provide one or more basic service sets (BSSs). In some embodiments, the AP wireless device may be an AP multi-link device (MLD), which may be capable of providing a BSS on each of multiple links, such as on a 2.4 GHz link, a 5 GHz link, and/or a 6 GHz link. The AP wireless device may operate in a standalone manner or may be affiliated with one or more other devices, e.g., as part of a larger network. For example, the AP wireless device could be a member of a multi-access point (MAP) system, which could include multiple AP wireless devices, in some embodiments.

The AP wireless device may be capable of establishing a wireless association with one or more non-AP (or "STA") wireless devices. Such wireless associations may be established using Wi-Fi, wireless communication techniques that are based at least in part on Wi-Fi, and/or any of various other wireless communication technologies, according to various embodiments. For example, an access point (AP) wireless device may provide (e.g., broadcast) beacon transmissions including information for associating with the AP wireless device, and one or more other wireless devices (e.g., non-AP wireless devices) may request to associate with the AP wireless device using the information provided in the beacon transmissions, as one possibility. Use of (e.g., unicast) probe requests and probe responses may also be possible, in some instances, for a non-AP wireless device to obtain AP parameters and/or other system information for the AP wireless device. Variations and/or other techniques for establishing an association are also possible.

The AP wireless device may provide wireless local area network functionality to associated wireless devices, at least according to some embodiments. As part of the wireless local area network functionality, it may be possible for wireless devices to contend for medium access and perform wireless transmissions on one or more wireless communication channels (each of which could possibly include multiple sub-channels) according to general provisions of the wireless communication technology in use by the wireless local area network (e.g., Wi-Fi, as one possibility) and/or network specific parameters configured by the AP wireless device.

For example, at least according to some embodiments, performing a downlink data transmission from the AP wireless device to a non-AP wireless device in such a wireless local area network may include contending for medium access (e.g., to avoid collisions and potential interference), and, once medium access is obtained, transmitting a physical layer (PHY) protocol data unit (PPDU) (which may also be referred to as a downlink frame) to the destination wireless device. The downlink frame may include physical layer signaling (e.g., including a preamble for frame detection, timing and frequency synchronization, channel estimation, etc., and header information indicating packet configuration, format, data rates, channel occupation time, and/or other control information) and data (which may in turn include one or more higher layer packets, such as media access control (MAC) protocol data units (MPDUs). Note that other types of transmissions (e.g., including triggered uplink frames, enhanced distributed channel access (EDCA) uplink frames, transmission opportunity (TXOP) sharing for peer-to-peer (P2P) communications, etc.) may also be possible in such a wireless local area network. In some embodiments, medium access may be obtained for a period of time (e.g., a transmit opportunity or "TXOP") using an initial control frame (ICF) / initial control response (ICR) signaling exchange, such as a request-to-send (RTS) or multi-user RTS (MU-RTS) and clear-to-send (CTS) exchange (e.g., for downlink or EDCA uplink operation) or a buffer status report poll (BSRP) and buffer status report (BSR) exchange (e.g., for triggered uplink operation), among various possibilities.

A non-AP STA in such a system can be capable of operating on multiple wireless links using enhanced multi-link single radio (EMLSR) techniques. For example, an EMLSR capable STA may be able to simultaneously monitor multiple links (e.g., for clear channel assessment and/or to receive certain signaling information), using a main radio and an auxiliary radio, or using a reconfigurable radio, or another EMLSR architecture. It may also be the case that an EMLSR is not capable of simultaneously transmitting or receiving data frames on multiple links; for example, the radio architecture of the EMLSR device may include only a single radio with bandwidth, modulation and coding scheme (MCS), and other capabilities sufficient to support data frame communication. It can be the case that a device with capability to transmit or receive data frames on multiple links at the same time can be referred to as a simultaneous transmit and receive (STR) capable device, in some instances. The AP wireless device may be a STR capable device, in some embodiments.

The (STR) AP wireless device and the (EMLSR) non-AP STA can set up multiple wireless links. For example, a 5 GHz link and a 6 GHz link can be available in a Wi-Fi based communication system, as one possibility. The AP and the non-AP STA can attempt communication on those links in such a manner that a cross-link collision occurs. For example, the AP may generate an ICF configured for transmission to the non-AP STA, and may contend for medium access and transmit the ICF to the non-AP STA on a first link. The non-AP STA may contend for medium access to transmit an ICF or other uplink frame to the AP on a second link with timing such that the non-AP STA does not receive the entire ICF from the AP, and so does not respond to the ICF from the AP, causing ICF failure. For example, the AP may determine that MU-RTS failure has occurred after a CTS timeout period has elapsed without receiving a CTS, or the AP may determine that BSRP failure has occurred if no BSR is received a short interframe space (SIFS) after the end of the BSRP transmission. Thus, it can be the case that an AP can determine that ICF failure has occurred based on an ICR timeout period or other configured time period elapsing without reception of an ICR.

The AP can determine whether such ICF failure is due to a cross-link collision (502). For example, since the AP may be STR capable, the AP may be able to receive the ICF or other uplink frame from the non-AP STA on the second link, and determine based at least in part on the timing of the ICF or other uplink frame that the ICF failure on the first link is due to cross-link EMLSR operation by the non-AP STA. Alternatively, if no ICF or other uplink frame is received from the non-AP STA on the second link (or other non-AP STAs on any other links set up between the AP MLD and the non-AP MLD) with timing that would correspond to cross-link EMLSR operation causing the ICF failure on the first link, it may be the case that the AP can determine that the ICF failure on the first link is not due to cross-link EMLSR operation by any STAs of non-AP MLD.

The AP can determine a contention window for the non-AP STA based at least in part on whether ICF failure is due to a cross-link collision (504). In some embodiments, this can include determining to use a last effective contention window (e.g., leaving the contention window unchanged for the non-AP STA) if the multi-link wireless device has initiated a TXOP on a second link with timing indicative of a cross-link collision, and determining to modify the contention window for the non-AP STA (e.g., doubling the last effective contention window, as one possibility) if the multi-link wireless device has not initiated a TXOP on a second link with timing indicative of a cross-link collision. The AP may select a backoff to contend for medium access for its next transmission to the non-AP STA of a non-AP MLD from the (possibly modified) determined contention window.

This approach may be useful since, although increasing the contention window may be beneficial in at least some other cases (e.g., if ICF failure is due to a collision caused by medium congestion, as one possibility), increasing the contention window may not remediate ICF failure instances that are due to EMLSR cross-link collisions, and so may only serve to reduce medium use efficiency, at least according to some embodiments.

In some embodiments, the AP may additionally or alternatively determine to not respond (e.g., for a configured period of time) to uplink transmissions from the non-AP STA on other links (e.g., including the second link) based at least in part on generating and transmitting the ICF to the non-AP STA on the first link. This may prevent the non-AP STA from occupying the second link with an uplink transmission (e.g., as the non-AP STA may abandon the TXOP on the second link when no ICR is received within a configured ICR timeout period) when the AP has a downlink transmission for the non-AP STA, such that the AP can try again to perform another downlink transmission more quickly after such an EMLSR cross-link collision. However, this may also involve more wasted medium usage, particularly if the non-AP STA initiates the TXOP on the second link by directly transmitting an uplink data frame rather than by transmitting an ICF, at least in some embodiments.

The AP and/or non-AP STA can also or alternatively implement one or more techniques for avoiding EMLSR same-link collisions. Such techniques may, for example, make use of knowledge of a TXOP occurring on one EMLSR link to adjust or modify backoff counter operation on another EMLSR link between the AP and the non-AP STA.

For example, a device (e.g., the AP MLD or the non-AP MLD) can determine that a TXOP over a ("first") EMLSR link is occurring (602) and contention for a TXOP over another ("second") EMLSR link is being initiated. The device can then adjust backoff counter operation for the second EMLSR link based at least in part on the TXOP on the first EMLSR link (604), e.g., if the TXOP over the second EMLSR link and the TXOP over the first EMLSR link are with STAs of the same MLD.

Such adjustment/modification may be intended to reduce the likelihood that backoff counters for multiple devices (e.g., both the AP and the non-AP STA, or, in the case of multi-user operation, multiple non-AP STAs, in various instances) elapse (reach 0) at the same time for the second EMLSR link, which could result in those multiple devices' attempted transmissions on the second EMLSR link to collide.

As one possibility, adjusting the backoff counter operation for the second EMLSR link can include pausing (or deferring the start of) the backoff counter for the second EMLSR link during the TXOP on the first EMLSR link, and resuming (or permitting the start of) the backoff counter for the second EMLSR link after returning to listening operation after the end of TXOP on the first EMLSR link, if the TXOP is to another non-AP STA of the same non-AP MLD. The pausing/deferring can be triggered by the end of an ICF or ICR used in initiating the TXOP, or using any of various other possible timing rules, according to various embodiments. The resuming/permitting start of backoff can be triggered after a configured transition delay after the end of the TXOP on the first EMLSR link, or using any of various other possible timing rules, according to various embodiments.

As another possibility, a backoff counter for the second EMLSR link can continue to operate during the TXOP on the first EMLSR link, but the device may not initiate a TXOP on the second EMLSR link based on a backoff counter for the second EMLSR link that reaches 0 during a TXOP on the first EMLSR link, and may instead start a new backoff counter after completion of the TXOP on the first EMLSR link in such a case, if the TXOP is to another non-AP STA of the same non-AP MLD. For example, adjusting the backoff counter operation for the second EMLSR link could include determining that the backoff counter for the second EMLSR link has reached 0 during the TXOP on the first EMLSR link, and starting a new backoff counter for the second EMLSR link after returning to listening operation after the TXOP on the first EMLSR link, if the TXOP is to another non-AP STA of the same non-AP MLD, based at least in part on the backoff counter for the second EMLSR link having reached 0 during the TXOP on the first EMLSR link. The new backoff counter may be selected from the current contention window.

Thus, according to the methods of Figures 5-6, it can be possible to handle cross-link EMLSR collisions, and to avoid at least some same-link EMLSR collisions, such as to provide more efficient wireless device and network operation, at least according to some embodiments.

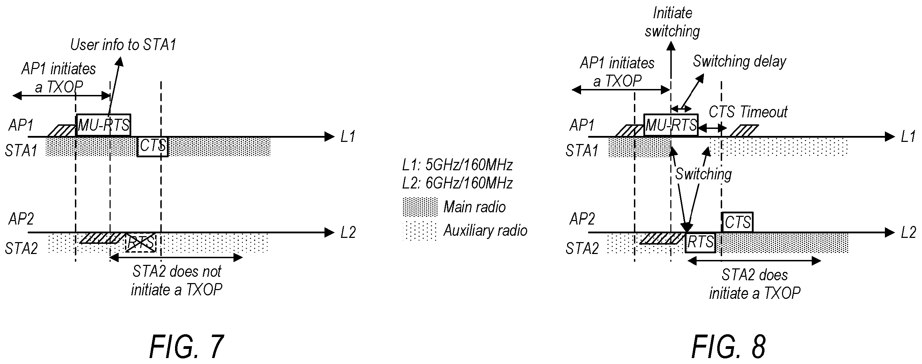

### Figures 7-22 and Additional Information

Figures 7-22 illustrate further aspects that might be used in conjunction with the methods of Figures 5-6. It should be noted, however, that the exemplary details illustrated in, and described with respect to, Figures 7-22 are not intended to be limiting to the disclosure as a whole: numerous variations and alternatives to the details provided herein below are possible and should be considered within the scope of the disclosure.

Enhanced multi-link single radio (EMLSR) is a feature introduced in IEEE 802.11be and widely adopted in Wi-Fi 7 capable wireless devices. Devices that support EMLSR can potentially operate (e.g., with some limitations) on multiple links at the same time, with a single full capability radio. There can be multiple possible wireless device design and architecture options that can support such EMLSR operation, for example including designs with one full capability radio and one or more limited capability radios (e.g., "scan" or "auxiliary" radios), and/or including designs with a reconfigurable antenna architecture, among various possibilities.

With new generation device deployment (e.g., including Wi-Fi 8 STAs), the number of EMLSR links that a wireless device supports can potentially increase even further. With EMLSR operation, there can also possibly be EMLSR cross-link collision and EMLSR same-link collision issues, which can possibly be augmented by increasing the number of EMLSR links. An excessive number of such collisions could potentially result in inefficiency in the network, as well as worse latency and throughput performance.

A same-device EMLSR cross-link collision can happen in a multi-link operation (MLO) scenario when one STA ("STA1") of a STA MLD starts an uplink transmit opportunity (TXOP) on a first link ("L1") with one AP ("AP1") of an AP MLD and another AP ("AP2") of the AP MLD starts a downlink TXOP with another STA ("STA2") of the STA MLD on another link ("L2"). Since STA2 does not have any radio to receive a MU-RTS for the DL TXOP on L2 due to the operation on L1, MU-RTS/CTS failure can occur. The probability of such an EMLSR cross-link collision may increase by increasing the number of EMLSR links; when there are more EMLSR links, APs of the AP MLD may try to initiate a DL TXOP with the STAs of a non-AP MLD over different EMLSR links while the STA is already in an UL TXOP, so the effect of cross-link collision can be augmented as the number of EMLSR links for a non-AP MLD increases.

A same-device EMLSR same-link collision can occur in a MLO scenario when there is an uplink or downlink TXOP between an AP and a STA over a first link, and one or more other APs and STAs of the same AP MLD and non-AP MLD access the channel over a second link to initiate a TXOP at the end of the TXOP on the first link, which can result in an initial control frame (ICF) collision.

Figures 7-10 illustrate possible cross-link collision and near-collision scenarios that could occur for one possible EMLSR device architecture, according to some embodiments. In the EMLSR architecture of the scenarios of Figures 7-10, a non-AP MLD has a main radio (e.g., with sufficient bandwidth, modulation and coding scheme, and/or other capability for Wi-Fi data communication) and one or more auxiliary radios (e.g., with limited bandwidth, modulation and coding scheme, and/or other capability, which may be sufficient for performing clear channel assessment and/or reception of initial control frames (e.g. MU-RTS and BSRP), among various possibilities).

In the scenario of Figure 7, AP1 of an AP MLD initiates a TXOP on L1 before a non-AP MLD starts switching its main radio to L2 to initiate a TXOP. In this case, STA1 receives the MU-RTS up to the user info field and is able to determine to continue operation on L1 for the TXOP, such that STA2 does not initiate a TXOP on L2 and is prevented from causing a cross-link collision.

In the scenario of Figure 8, AP1 initiates a TXOP on L1 but the STA1 is unable to receive the user info field. In this case, the main radio starts switching to L2 before STA1 determines whether AP1 wants to initiate a TXOP with it, and STA2 starts a TXOP on L2. Thus, a MU-RTS collision and CTS timeout occurs on L1 due to the cross-link activity of the non-AP MLD. Note that the AP2 can still respond with a CTS on L2 such that the TXOP on L2 can still proceed in this scenario, at least according to some embodiments.

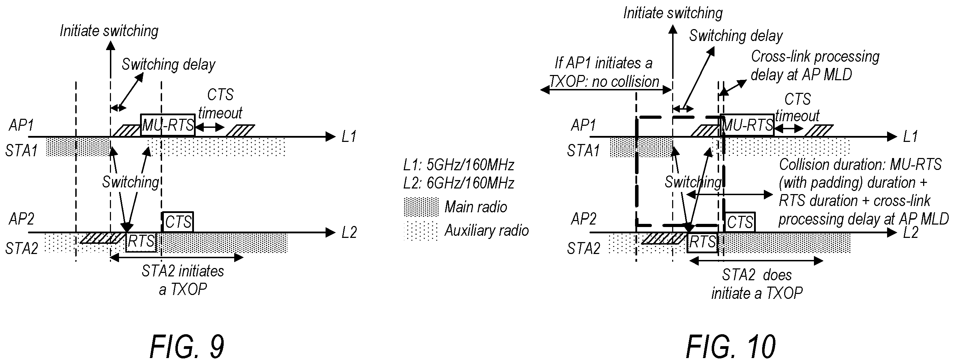

In the scenario of Figure 9, radio switching between L1 and L2 is performed by the non-AP MLD to initiate a TXOP on L2, with timing such that the auxiliary radio does not receive a MU-RTS transmitted by AP1 on L1 (e.g., due to local desensing from the transmission on L2 and/or the timing of the radio switching). Similar to the scenario of Figure 8, a MU-RTS collision and CTS timeout occurs on L1 due to the cross-link activity of the non-AP MLD. Note that in this scenario as well, the AP2 can respond with a CTS on L2 such that the TXOP on L2 can still proceed in this scenario, at least according to some embodiments.

In the scenario of Figure 10, the non-AP MLD initiates switching of main radio to L2 and starts a TXOP before AP1 initiates a TXOP on L1. AP2 receives the RTS on L2 but there is a "cross-link processing delay" time to deliver the information to AP1, so AP1's TXOP initiation on L1 proceeds and results in a cross-link collision. Note that the "cross-link processing delay" can vary depending on the device implementation and possibly other factors. As shown, the total duration for the cross-link collision in this scenario can include the duration of MU-RTS with padding + RTS + cross-link processing time at the AP MLD, at least in some embodiments.

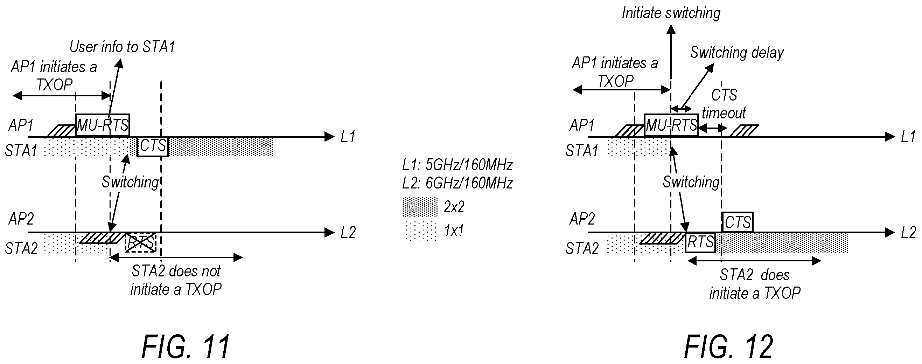

Figures 11-14 illustrate possible cross-link collision and near-collision scenarios that could occur for another possible EMLSR device architecture, according to some embodiments. In the EMLSR architecture of the scenarios of Figures 11-14, a non-AP MLD has a reconfigurable antenna array, which can be reconfigured for 1x1 operation on multiple links (e.g., with limited bandwidth, modulation and coding scheme, and/or other capability, which may be sufficient for performing clear channel assessment and/or at least reception of initial control frames (e.g. MU-RTS and BSRP), among various possibilities) or 2x2 operation on one link (e.g., with sufficient bandwidth, modulation and coding scheme, and/or other capability for Wi-Fi data communication).

In the scenario of Figure 11, similar to the scenario of Figure 7, AP1 of an AP MLD initiates a TXOP on L1 before a non-AP MLD starts reconfiguring its radio to 2x2 on L2 to initiate a TXOP. In this case, STA1 receives the MU-RTS up to the user info field and is able to determine to instead reconfigure its radio to L1 for the TXOP initiated by AP1, such that STA2 does not initiate a TXOP on L2 and is prevented from causing a cross-link collision.

In the scenario of Figure 12, similar to the scenario of Figure 8, AP1 initiates a TXOP on L1 but the STA1 is unable to receive the user info field because the radio switch to L2 happens before the user info field is received. In this case, radio reconfiguration to 2x2 on L2 starts (abandoning reception on L1) before STA1 determines whether AP1 wants to initiate a TXOP with it, and STA2 starts a TXOP on L2. Thus, a MU-RTS collision and CTS timeout occurs on L1 due to the cross-link activity of the non-AP MLD. Note that the AP2 can still respond with a CTS on L2 such that the TXOP on L2 can still proceed in this scenario, at least according to some embodiments.

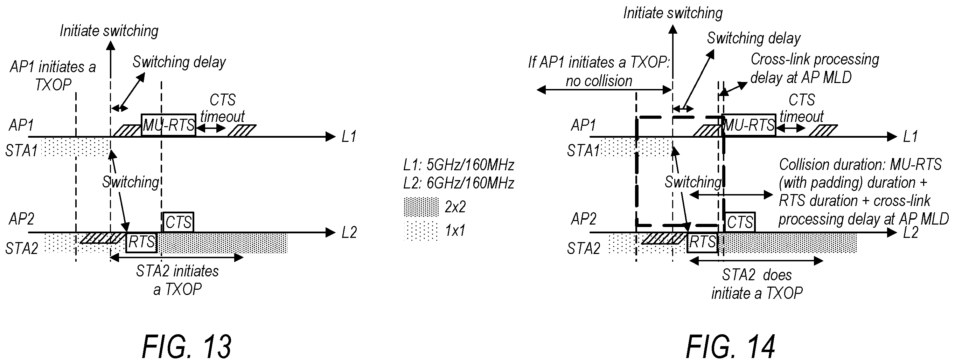

In the scenario of Figure 13, similar to the scenario of Figure 9, radio reconfiguration to 2x2 on L2 is performed by the non-AP MLD to initiate a TXOP on L2 such that STA1 does not receive a MU-RTS transmitted by AP1 on L1 (e.g., due to the timing of the radio switching). A MU-RTS collision and CTS timeout occurs on L1 due to the cross-link activity of the non-AP MLD. Note that in this scenario as well, the AP2 can respond with a CTS on L2 such that the TXOP on L2 can still proceed in this scenario, at least according to some embodiments.

In the scenario of Figure 14, similar to the scenario of Figure 10, the non-AP MLD initiates radio reconfiguration to 2x2 on L2 and starts a TXOP before AP1 initiates a TXOP on L1. AP2 receives the RTS on L2 but there is a "cross-link processing delay" time to deliver the information to AP1, so AP1's TXOP initiation on L1 proceeds and results in a cross-link collision. Also similar to the scenario of Figure 10, the "cross-link processing delay" can vary depending on the device implementation and possibly other factors. As shown, the total duration for the cross-link collision in this scenario can include the duration of MU-RTS with padding + RTS + cross-link processing time at the AP MLD, at least in some embodiments.

In some embodiments, the consequences of a cross-link collision such as could occur in the scenarios of Figures 8-10 and 12-14 could include doubling contention window parameters, inefficient channel usage, and/or a rate adaptation effect. For example, if the rate adaptation algorithm considers ICF failure in updating the rate, this type of cross-link collision can cause rate degradation. However, since this type of ICF is not due to poor RSSI or interference, it may be the case that degrading the rate is not warranted or helpful in this scenario.

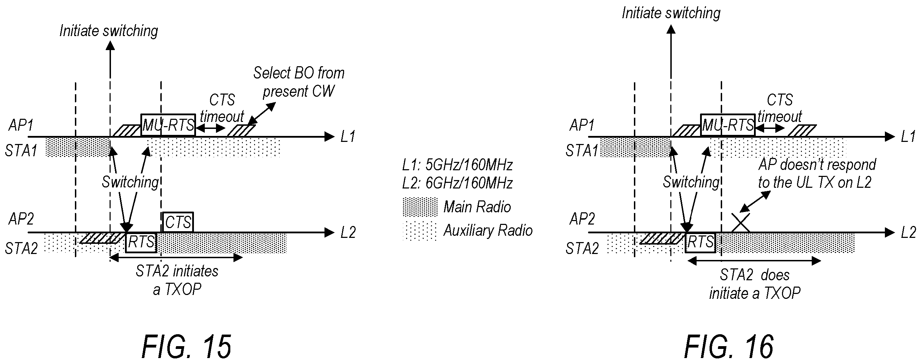

Accordingly, improved handling of such cross-link collisions scenarios can potentially be beneficial to wireless device operation and overall network efficiency, at least in some embodiments. Figure 15 illustrates example aspects of one such possible cross-link collision handling technique, according to some embodiments. As shown, it can be the case that when an AP determines that a MU-RTS collision is due to cross-link collision, it does not double the contention window, and instead picks a new backoff from the last effective contention window. To determine that a MU-RTS collision is due to cross-link collision, when an AP of an AP MLD transmits a MU-RTS to a STA of a non-AP MLD but does not receive a CTS, it can check if a corresponding STA of the same non-AP MLD on a different link has initiated a TXOP with another AP of the same AP MLD in uplink. If so, the AP can determine to not double the contention window due to the MU-RTS/CTS failure. A rule can potentially be defined in 802.11 and/or other wireless communication specifications to specify that such cross-link collisions do not result in doubling the contention window, in some embodiments.

Figure 16 illustrates example aspects of another such possible cross-link collision handling technique, according to some embodiments. As shown, it can be the case that when an AP initiates a TXOP with a STA of a non-AP MLD, it doesn't respond to any uplink transmission from other STAs of the same non-AP MLD. This can potentially reduce the duration that the collision prevents the AP from initiating a TXOP with the non-AP MLD on L1, e.g., since STA2 does not proceed with the TXOP initiated on L2 after AP2 doesn't respond to the RTS on L2, however, in some cases, it can also result in additional wasted medium resources. Further, if uplink on L2 is not started with RTS/CTS exchange (e.g., UL TXOP is not required to be initiated by RTS/CTS), then there can be an even larger waste of medium resources, e.g., for transmission of an entire data PPDU by STA2.

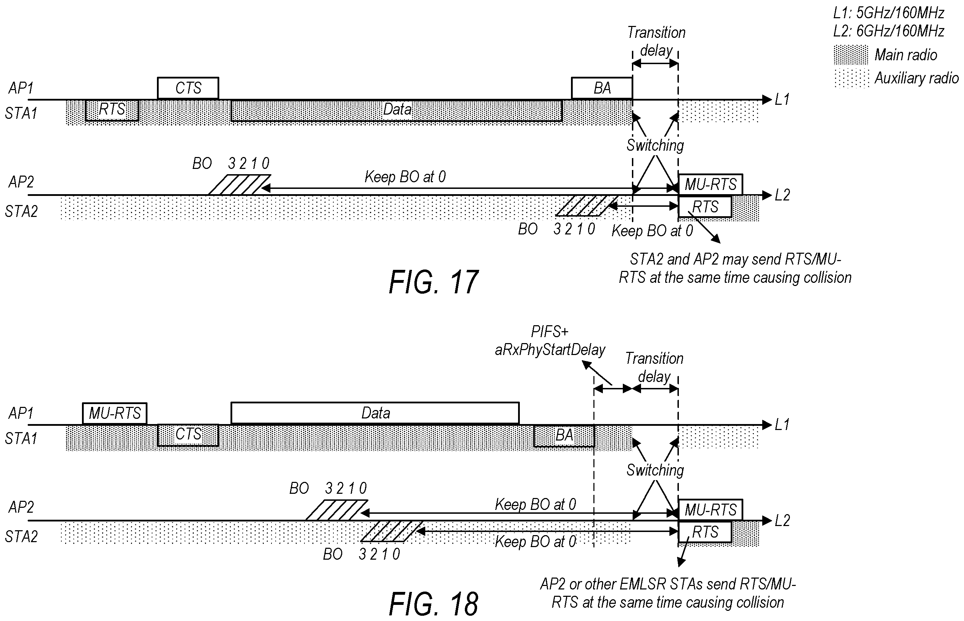

Figures 17-18 illustrate example aspects of possible uplink and downlink EMLSR same-link collision scenarios, according to some embodiments. The illustrated scenarios are shown with a wireless device that has a main radio / auxiliary radio based EMLSR architecture, but it should be noted that similar scenarios can also occur for other EMLSR architectures as well. In these example scenarios, for a non-AP MLD, when an EMLSR STA is involved in a TXOP on one of the links, another EMLSR STA can resume its backoff on the other link. Thus, in the uplink example of Figure 17, STA2 and AP2 are contending during an ongoing TXOP on L1 (e.g., between STA1 of the same non-AP MLD and AP1 of the same AP MLD). STA2 can contend during the BA reception on L1, given the TX of data on L1 de-senses L2. When the backoff counter reaches 0, it will remain at 0 (given the medium remains IDLE). Given that AP2 wants to initiate a TXOP with another STA of the same non-AP MLD, both AP2 and STA2 transmit MU-RTS and RTS at the same time after the transition delay, which results in a collision. In the downlink example of Figure 18, STA2 and AP2 are contending during an ongoing TXOP on L1 (e.g., between STA1 of the same non-AP MLD and AP1 of the same AP MLD). When the backoff counter reaches 0, it will remain at 0 (given the medium remains IDLE), and if the AP2 initiates a TXOP with STA2 of the non-AP MLD, the RTS/MU-RTS will be transmitted at the same time after the transition delay, which results in a collision. Additionally, for a multi-user downlink case, in which AP1 is transmitting to multiple STAs on L1, the likelihood of other STAs of the non-AP MLDs sending RTS frames after the end of the TXOP, and correspondingly the probability of collisions, can further increase. Also note that in both of the above scenarios (i.e., the scenarios of Figures 17-18), if the STA of non-AP MLD initiates the UL TXOP with a data physical layer protocol data unit (PPDU) instead of RTS, the medium airtime can be wasted for an even longer duration.

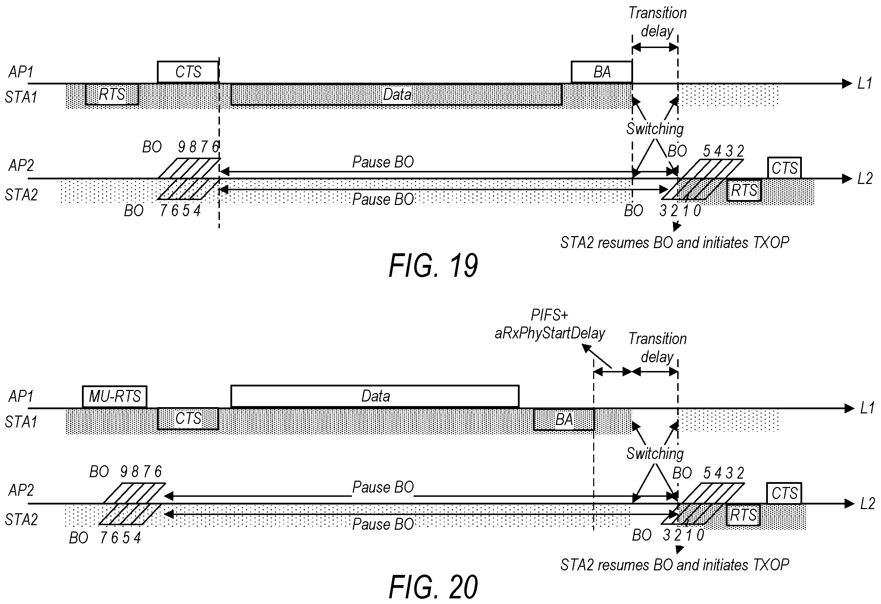

Figures 19-22 illustrate example aspects of possible approaches to avoiding uplink and downlink EMLSR same-link collision scenarios, according to some embodiments. Figures 19-20 illustrate example aspects of an approach in which AP and STA follow behavior for all of the access categories' (AC's) of enhanced distributed channel access (EDCA). For example, a rule could be defined that if a STA is involved in a TXOP (DL or UL) over a EMLSR link, it shall not contend, and shall pause its backoff over another EMLSR link. The STA can be allowed to resume its backoff after returning to listening operation at the end of the TXOP, according to some embodiments. A rule could also be defined that if an AP of an AP MLD is involved in a TXOP over an EMLSR link with a STA of a non-AP MLD, another AP of the same AP MLD shall not contend to initiate a TXOP with the other STA of the same non-AP MLD over another link until after the end of the TXOP on the first link. The trigger event to pause the backoff could be the end of the CTS, e.g., since at that time the continuation of the TXOP can be determined by both the AP and the STA, as one possibility. Other trigger events for pausing the backoff can also or alternatively be used, however, such as the end of RTS transmission, as one possibility.

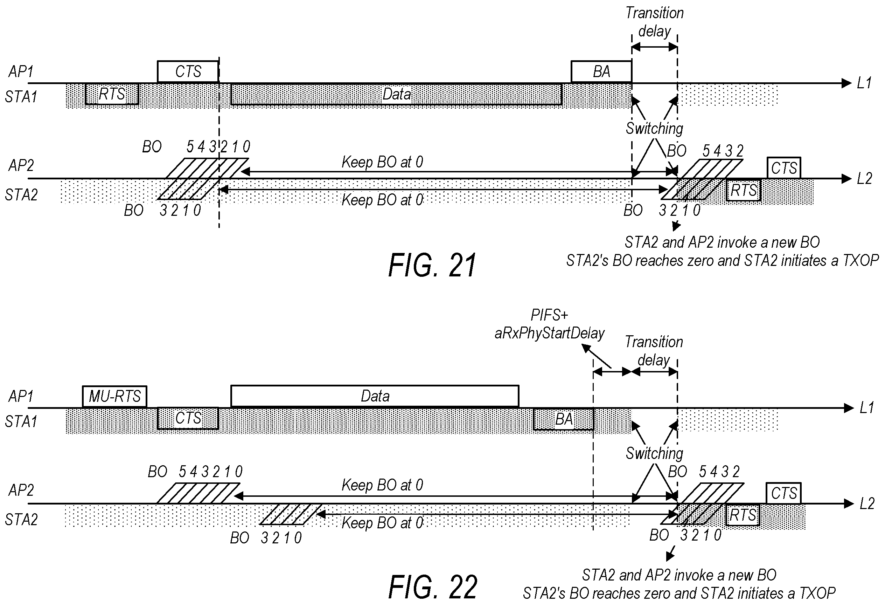

Figures 21-22 illustrate example aspects of another approach in which AP and STA follow behavior for all the ACs of EDCA. In these examples, a rule could be defined that when there is a downlink or uplink TXOP over an EMLSR link, if the backoff counter of an AP reaches 0 during TXOP or transition delay on another EMLSR link, then other APs of the same AP MLD shall not initiate a TXOP with other STA(s) of the same non-AP MLD(s) after returning to listening operation and shall invoke a new backoff number from the present contention window. A rule could also be defined that when there is a downlink or uplink TXOP over an EMLSR link, if the backoff counter of a STA reaches 0 during TXOP or transition delay on another EMLSR link, then other STAs of the same non-AP MLD shall not initiate a TXOP with another AP of the same AP MLD after returning to listening operation and shall invoke a new backoff number from the present contention window.

It should be noted that while many of the examples provided herein include TXOP initiation using MU-RTS as an initial control frame, similar cross-link collision and same-link collision scenarios, as well as approaches to their handling and avoidance, can also apply for TXOPs initiated using buffer status report poll (BSRP) frames and/or other initial control frames, according to various embodiments.

As noted previously herein, it can be the case that performing rate adaptation based on RTS failure in cross-link collision scenarios is not beneficial. Accordingly, at least in some embodiments, it can be the case that an AP and a STA do not use the RTS and ICF (MU-RTS/BSRP) failure as a basis for rate degradation, at least for same-link and cross-link collisions. For example, since the rate of RTS and ICF are generally already low (basic MCS rates), the cause of RTS and ICF failure (e.g., no response to RTS and ICF) in many cases may not be due to link quality, and thus it may be determined to not use such failures for rate adaptation.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Still other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a STA 106) can be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device can be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for operation in wireless communication, comprising:
generating an initial control frame configured for transmission, on a first link, to a multi-link wireless device;
determining that an initial control frame failure has occurred for the initial control frame; and
determining a contention window for the multi-link wireless device based at least in part on whether the multi-link wireless device has initiated a transmit opportunity (TXOP) on a second link.

2. The method of claim 1, wherein determining the contention window comprises:
determining to use a last effective contention window when the multi-link wireless device has initiated a TXOP on a second link; and
determining to increase a duration of the last effective contention window when the multi-link wireless device has not initiated a TXOP on a second link.

3. The method of any of the preceding claims, wherein the method further comprises:
selecting a backoff time associated with contending for medium access for a transmission to the multi-link wireless device based at least on the determined contention window.

4. The method of any of the preceding claims, wherein the initial control frame comprises one of:
a multi-user request to send (MU-RTS) frame; or
a buffer status report poll (BSRP) frame.

5. The method of any of the preceding claims,
wherein determining that the initial control frame failure has occurred for the initial control frame comprises determining that an initial control response (ICR) timeout period or other configured time period has elapsed without reception of an ICR.

6. The method of any of the preceding claims, wherein the method further comprises:
determining to not respond to an uplink transmission from the multi-link wireless device on the second link based at least in part on generating the initial control frame configured for transmission to the multi-link wireless device on the first link.

7. A computer program comprising instructions for performing any of the methods of claims 1-6.

8. A wireless device, comprising:
one or more antennas;
one or more radios operably coupled to the one or more antennas; and
a processor operably coupled to the one or more radios;
wherein the wireless device is configured to:
determine that a transmit opportunity (TXOP) is occurring on a first enhanced multi-link single radio (EMLSR) link; and
adjust a backoff counter operation for a second EMLSR link based at least in part on the TXOP on the first EMLSR link.

9. The wireless device of claim 8,
wherein the TXOP on the first EMLSR link is associated with a first station (STA) of a multi-link device (MLD),
wherein a second TXOP to be initiated on the second EMLSR link is associated with a second STA of the MLD, and
wherein the backoff counter operation for the second EMLSR link is adjusted based at least in part on the TXOP on the first EMLSR link and the second TXOP to be initiated on the second EMLSR link being associated with respective STAs of one MLD.

10. The wireless device of any of claims 8-9, wherein to adjust the backoff counter operation for the second EMLSR link, the wireless device is further configured to:
pause a backoff counter for the second EMLSR link during the TXOP on the first EMLSR link; and
resume the backoff counter for the second EMLSR link after resuming a listening operation after the TXOP on the first EMLSR link.

11. The wireless device of claim 10, wherein the backoff counter for the second EMLSR link is paused after:
an initial control response (ICR) initiating the TXOP on the first EMLSR link, or
an initial control frame (ICF) initiating the TXOP on the first EMLSR link.

12. The wireless device of any of claims 8-11,
wherein adjusting the backoff counter operation for the second EMLSR link further comprises:
determining that a backoff counter for the second EMLSR link has elapsed during the TXOP on the first EMLSR link; and
starting a new backoff counter for the second EMLSR link after resuming a listening operation after the TXOP on the first EMLSR link based at least in part on the backoff counter for the second EMLSR link having elapsed during the TXOP on the first EMLSR link.

13. The wireless device of claim 12,
wherein a duration of the new backoff counter is selected based at least in part on a current contention window.

14. The wireless device of any of claims 8-13,
wherein the wireless device comprises an access point multi-link wireless device capable of simultaneous transmit and receive (STR) operation on the first EMLSR link and the second EMLSR link, and
wherein the TXOP and the backoff counter operation are occurring with a non-AP multi-link wireless device capable of EMLSR operation on the first EMLSR link and the second EMLSR link.

15. The wireless device of any of claims 8-13,
wherein the wireless device comprises a non-access point multi-link wireless device capable of EMLSR operation on the first EMLSR link and the second EMLSR link.
